# EUROPEAN PATENT APPLICATION

(11) **EP 4 167 532 A1**
(43) Date of publication of application: **19.04.2023**
(21) Application number: 21824861.5
(22) Date of filing: 28.04.2021
(51) Int. Cl.: H04L 12/701, H04L 12/801, H04L 12/931

(54) **PATH DETERMINATION METHOD, APPARATUS AND DEVICE, AND STORAGE MEDIUM**

(30) Priority: 16.06.2020 CN 202010548819
(71) Applicant: Sanechips Technology Co., Ltd., Shenzhen, Guangdong 518055 (CN)
(72) Inventor: LIU, Jian, Shenzhen, Guangdong 518057 (CN); WANG, Weihan, Shenzhen, Guangdong 518057 (CN); WANG, Zhenguo, Shenzhen, Guangdong 518057 (CN); ZHANG, Shifeng, Shenzhen, Guangdong 518057 (CN)
(74) Representative: Swindell & Pearson Limited
(86) International application number: PCT/CN2021/090611
(87) International publication number: WO 2021/253997

(57) **Abstract**

A path determining method, apparatus and device, and a storage medium are disclosed. The method includes: determining, in a case that a current operating mode is a first mode, a valid path according to routing information of a recipient of information to be transmitted, if a service subrack in which the recipient of the information to be transmitted is located is consistent with a service subrack in which a transmission status indicated by a switch register is located (S 110); and determining, in a case that the current operating mode is a second mode, a valid path according to an information transmission mode and a recipient of information to be transmitted, if the recipient of the information to be transmitted is in a current service subrack and a transmission status indicated by the switch register is an intra-subrack transmission state (S120).

## Description

### CROSS-REFERENCE TO RELATED APPLICATION

The present application is filed on the basis of Chinese patent application No. 202010548819.7 filed June 16, 2020, and claims priority of the Chinese patent application, the entire contents of which are incorporated herein by reference.

### TECHNICAL FIELD

The present application relates to the field of packet data switching technologies, and in particular, to a method, an apparatus and a device for determining a path, and a storage medium.

### BACKGROUND

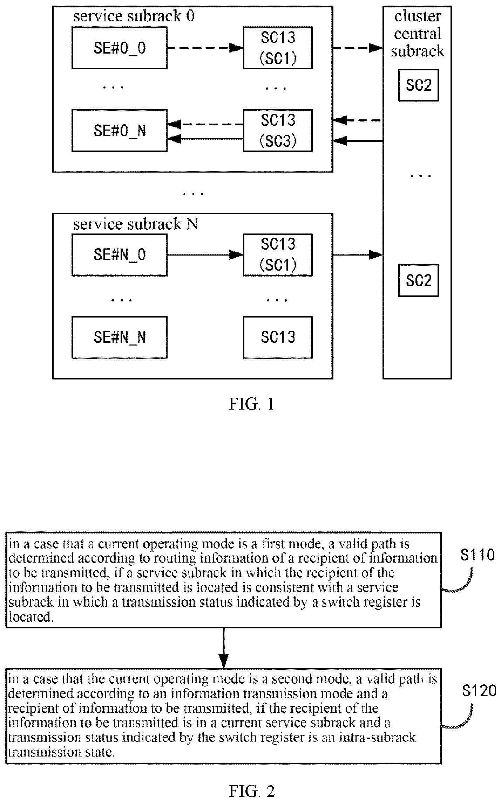

In a three-stage CLOS (multi-stage circuit) switching network, data cells sent by a switching access chip (SE) pass through a switching network chip (SC) three times in total. FIG. 1 provides a structural block diagram of a three-level CLOS switching network. As shown in FIG. 1, dashed lines represent switching in the same service subrack, and solid lines represent switching between different service subracks. SEs and a cluster line-card subrack (SC13 mode) form a service subrack. SC13 mode means that the switching network chip has both SC1 mode and SC3 mode, and can switch between the two modes for operation. SC13 (SC1) means that the network switching chip is currently operating in the SC1 mode, and SC13 (SC3) means that the switching network chip is currently operating in the SC3 mode. Through the three-stage switching mode, the switching of traffic from a service subrack to a cluster central subrack and then to a service subrack is completed, and the traffic finally reaches a destination switching access chip. The three-level switching mode includes SC1 mode, SC2 mode, and SC3 mode. A process of transmitting information from a switching access chip SE#0_0 through a switching network chip SC1 is first-stage switching. A process of receiving and sending information by a switching network chip SC2 is second-stage switching. A process of transmitting information from a switching network chip SC3 to a destination switching chip SE#0_N is third-stage switching. Transmission data data in the first-stage switching is transmitted in the SC1 mode. Transmission in the second-stage switching is transmitted in the SC2 mode. Transmission data in the third-stage switching is transmitted in the SC3 mode. When the first-stage switching and the third-stage switching are performed, the switching network chip is configured in the SC 13 mode. In other words, the first-stage switching and the third-stage switching are performed by the identical physical chip with different logics, i.e., the identical physical chip is configured with both the SC1 mode and the SC3 mode. When the second-stage switching is performed, the switching network chip is configured in the SC2 mode.

In conventional three-stage CLOS switching, a switching path for traffic from a source SE to a destination SE is: Source SE>SC 1>SC2>SC3>destination SE, and data exchange is performed through this switching path. However, this method increases the transmission delay on the switching path and the probability of occurrence of congestion in the switching network.

### SUMMARY

Embodiments of the present application provide a method, an apparatus and a device for determining a path, and a storage medium, to solve, at least to some extent, one of the related technical problems including determining a valid path by determining whether a service subrack in which a recipient of information to be transmitted is located is consistent with a service subrack in which a transmission status indicated by a switch register is located, thereby reducing the transmission delay and the probability of network congestion.

In view of the above, according to an embodiment of the present application, a method for determining a path is provided. The method includes the following steps: determining, in a case that a current operating mode is a first mode, a valid path according to routing information of a recipient of information to be transmitted, in response to a service subrack in which the recipient of the information to be transmitted is located being consistent with a service subrack in which a transmission status indicated by a switch register is located; and determining, in a case that the current operating mode is a second mode, a valid path according to an information transmission mode and a recipient of the information to be transmitted, in response to the recipient of the information to be transmitted being in a current service subrack and a transmission status indicated by the switch register being an intra-subrack transmission state.

According to an embodiment of the present application, a device for determining a path is further provided. The device includes: a first path determination module, configured to determine, in a case that a current operating mode is a first mode, a valid path according to routing information of a recipient of information to be transmitted, in response to a service subrack in which the recipient of the information to be transmitted is located being consistent with a service subrack in which a transmission status indicated by a switch register is located; and a second path determination module, configured to determine, in a case that the current operating mode is a second mode, a valid path according to an information transmission mode and a recipient of the information to be transmitted, in response to the recipient of the information to be transmitted being in a current service subrack and a transmission status indicated by the switch register being an intra-subrack transmission state.

According to an embodiment of the present application, an apparatus for determining a path is further provided. The device includes: one or more processors; and a memory storing one or more programs which, when executed by one or more processors, cause the one or more processors to perform the method for determining a path described above.

According to an embodiment of the present application, a computer-readable storage medium is further provided. The computer-readable storage medium stores a computer program which, when executed by a processor, causes the processor to perform the method for determining a path described above.

### BRIEF DESCRIPTION OF DRAWINGS

FIG. 1 is a structural block diagram of a three-stage CLOS switching network provided in some cases;
FIG. 2 is a flowchart of a method for determining a path according to an embodiment of the present application;
FIG. 3 is a schematic diagram of determining a valid path for information to be transmitted according to an embodiment of the present application;
FIG. 4 is a schematic diagram of a path delay compensation according to an embodiment of the present application;
FIG. 5 is a schematic structural diagram of a device for determining a path according to an embodiment of the present application; and
FIG. 6 is a schematic structural diagram of an apparatus for determining a path according to an embodiment of the present application.

### DETAILED DESCRIPTION

It should be understood that the embodiments described herein are merely used for illustrating the present application, and are not intended to limit the present application.

In the following description, suffixes such as "module," "component," or "unit" used to represent elements are used for facilitate the description of the present application only, and do not have special meanings. Therefore, "module," "component," and "unit" may be used interchangeably.

As shown in FIG. 2, according to an embodiment, a method for determining a path is provided, which is applied to a switching network chip. The method includes steps S 110 and S 120.

At a step of S 110, in a case that a current operating mode is a first mode, a valid path is determined according to routing information of a recipient of information to be transmitted if a service subrack in which the recipient of the information to be transmitted is located is consistent with a service subrack in which a transmission status indicated by a switch register is located.

With the development of packet data switching technologies, in an information transmission process of a conventional three-stage switching network, data needs to be switched from a service subrack to a cluster central subrack and then to a service subrack, and finally reaches an information recipient. Information received by one information recipient (destination SE, switching access chip) may come from the identical service subrack or from different service subracks, but all cells reaching the information recipient (destination SE) need to pass through the cluster central subrack. As a result, the cluster central subrack has to send a huge amount of information, leading to network congestions.

In view of the above, in the method for determining a path provided in the present application, a 1-bit switch register is additionally provided on the switching network chip to support a CPU in controlling the switching network chip to turn on or off intra-subrack switching and cross-subrack switching. The valid path is determined by determining whether a service subrack in which the recipient of the information to be transmitted is located is consistent with a service subrack in which the transmission status indicated by the switch register is located. The valid path may pass through the cluster central subrack or not. Therefore, not all information to be transmitted needs to be transmitted to the recipient through the cluster central subrack, so that connection links between the cluster central subrack and service subracks are reduced, thereby reducing the probability of network congestion.

In the embodiment, the first mode is an SC1 mode, and data transmitted in the SC1 mode is transmission data in first-stage switching. The second mode is an SC3 mode, and data transmitted in the SC3 mode is transmission data in third-stage switching. Both the SC1 mode and the SC3 mode belong to the identical physical chip, but correspond to different logics. The switching network chip can switch between the SC1 mode and the SC3 mode. The switching network chip is a physical chip that implements an information exchange function in a switching network, and a central switching chip is a switching network chip in the cluster central subrack.

In the embodiment, an n-bit link indication register is additionally provided, in which 0 and 1 are used to indicate whether a link is an intra-subrack link or a cross-subrack link. Whether 0 or 1 is used to indicate an intra-subrack link is not limited in the present application.

In the embodiment, the switch register is 0 or 1. When the switch register is 1, it indicates that the transmission status is intra-subrack transmission; and when the switch register is 0, it indicates that the transmission status is cross-subrack transmission. Alternatively, when the switch register is 0, it indicates that the transmission status is intra-subrack transmission; and when the switch register is 1, it indicates that the transmission status is cross-subrack transmission. Other representation methods may also be used to represent the transmission status, which is not limited in the present application. When the current operating mode is the first mode, the switching network chip is configured to receive information to be transmitted that is sent by a sender of the information to be transmitted, where the information to be transmitted contains a destination, i.e., a recipient of the information to be transmitted, and perform a routing information table lookup according to the recipient of the information to be transmitted to determine routing information of the recipient. An AND operation is performed on the link indication register and a result of the routing information table lookup to determine whether a valid path is present. That is, an intra-subrack link transmission or a cross-subrack link transmission is performed according to the path information indicated by the link indication register, and it is determined whether the service subrack in which the recipient is located is a current service subrack or another service subrack. In this case, if the service subrack in which the recipient is located is consistent with the service subrack in which the transmission status indicated by the switch register is located, the valid path is determined according to the result of the route table lookup.

In an embodiment, if the recipient of the information to be transmitted is in the current service subrack and the transmission status indicated by the switch register is the intra-subrack transmission state, a valid path for intra-subrack transmission is determined according to the routing information of the recipient of the information to be transmitted. When the recipient of the information to be transmitted is in the current service subrack, the information to be transmitted only needs to be exchanged within the current service subrack, and does not need to be sent to the central switching chip in the cluster central subrack. In this case, if the status of the switch register is the intra-subrack transmission state, the information to be transmitted is sent in the SC3 mode of switching network chip according to the valid path. Because both the SC1 mode and the SC3 mode are integrated on the identical switching chip, the identical switching network chip needs to switch between the modes to implement different functions. In this case, the information to be transmitted is transmitted within the current service subrack and does not need to be sent to the central switching chip, so that switching links between the cluster central subrack and the current service subrack are reduced, thereby reducing the probability of congestion at the cluster central subrack and the congestions in the switching network.

In an embodiment, if the recipient of the information to be transmitted is in another service subrack and the transmission status indicated by the switch register is a cross-subrack transmission state, a valid path for cross-subrack transmission is determined according to the routing information of the recipient of the information to be transmitted. When the recipient of the information to be transmitted is in another service subrack, the information to be transmitted needs to be transmitted across subracks. In this case, the valid path needs to pass through the central switching chip, i.e., the information to be transmitted needs to be sent to the central switching chip. In this case, if the status of the switch register is cross-subrack transmission, the information to be transmitted is sent to the corresponding central switching chip according to the valid path, so that the central switching chip sends the information to the switching network chip in the SC3 mode, and the switching network chip in turn sends the information to be transmitted to a corresponding destination chip, i.e., the information recipient. As such, the function of determining a valid path is completed. The operating mode of the central switching chip is the SC2 mode during data transmission, in which mode only cross-subrack switching is performed, so the operating principle and process of the central switching chip do not need to be changed.

In the embodiment, the status of the switch register indicates whether the transmission performed in this case is intra-subrack transmission or cross-subrack transmission. If the status of the switch register indicates intra-subrack transmission, cross-subrack links are blocked, and only intra-subrack transmission is performed. That is, the information to be transmitted is sent only when the recipient is in the current service subrack; otherwise, the sending of the information to be transmitted is stopped, and transmission failure information is reported. If the status of the switch register indicates cross-subrack transmission, intra-subrack links are blocked, and only cross-subrack transmission is performed. That is, the information to be transmitted is sent only when the recipient is in another service subrack; otherwise, the sending of the information to be transmitted is stopped, and transmission failure information is reported.

The information transmission mode of the information to be transmitted may be unicast or multicast. For unicast and multicast, the corresponding recipient needs to be found. After the recipient is determined, a routing table is looked up to determine routing information, and then it is determined whether the recipient is in the current service subrack or another service subrack according to intra-subrack transmission or cross-subrack transmission indicated by the link indication register. The valid path is determined according to the transmission status indicated by the switch register and the routing information of the recipient.

At a step of S 120, in a case that the current operating mode is a second mode, if the recipient of the information to be transmitted is in a current service subrack and a transmission status indicated by the switch register is an intra-subrack transmission state, a valid path is determined according to an information transmission mode and a recipient of information to be transmitted.

In the embodiment, the current operating mode is the second mode, i.e., the current operating mode of the switching network chip is SC3. In this case, the information to be transmitted that is received by the switching network chip may be from the current service subrack, or may be sent by another service subrack to the central switching chip and then sent by the central switching chip to the switching network chip. However, regardless of whether the recipient of the information to be transmitted is in the current service subrack or another service subrack, the switching network chip sends the information to be transmitted to the recipient in the current service subrack, i.e., the switching network chip in the SC3 mode performs intra-subrack transmission only, with cross-subrack links blocked. If the recipient of the information to be transmitted is in the current service subrack and the transmission status indicated by the switch register is intra-subrack transmission, a valid path is determined according to the information transmission mode and the recipient of the information to be transmitted, and the information to be transmitted is sent according to the valid path. If the recipient of the information to be transmitted is in another service subrack, transmission failure information is reported, because the information to be transmitted in this case must be transmitted within the current service subrack. If the transmission status indicated by the switch register is cross-subrack transmission, cross-subrack links are blocked and no information is sent.

The steps S 110 and S 120 are two methods correspondingly performed in the two different operating modes, and are not necessarily be executed in a chronological order.

For the case that the current operating mode is the second mode, if the recipient of the information to be transmitted is in the current service subrack and the transmission status indicated by the switch register is the intra-subrack transmission state, the valid path is determined according to the information transmission mode and the recipient of the information to be transmitted. In an embodiment, if the information transmission mode is a unicast mode, a valid path for intra-subrack transmission is determined according to the routing information of the recipient of the information to be transmitted. If the information transmission mode is a multicast mode, a valid path for intra-subrack transmission is determined according to a subrack number of the recipient of the information to be transmitted.

For the information to be transmitted in the unicast mode, the routing information of the recipient is found by a routing table lookup unit, a valid path is determined, and the information to be transmitted is sent to the corresponding recipient according to the valid path. For the information to be transmitted in the multicast mode, the recipient and a subrack number of the recipient are determined, a valid path is determined according to the subrack number, and the information to be transmitted is sent to the recipient, i.e., the destination chip, according to the valid path. In the multicast mode, adjacent device identifiers across subracks, i.e., subrack numbers of other service subracks and switching network chips included, are blocked.

In an embodiment, for the case that the current operating mode is the second mode, if the recipient of the information to be transmitted is in the current service subrack, the transmission status indicated by the switch register is the intra-subrack transmission state, and the sender of the information to be transmitted is in another service subrack, a delay compensation is performed for a timestamp of the information to be transmitted, and the valid path is determined according to the information transmission mode and the recipient of the information to be transmitted.

The information to be transmitted by intra-subrack transmission and the information to be transmitted by cross-subrack transmission are converged in the SC3 mode of the switching network chip. Because the intra-subrack transmission can send the information to the recipient without having to pass through the cluster central subrack, and the cross-subrack transmission needs to pass through the cluster central subrack in order to complete the transmission of the information, the intra-subrack transmission requires a shorter transmission path and a shorter time than that of the cross-subrack transmission, resulting in a path delay between the intra-subrack transmission and the cross-subrack transmission. Therefore, in some embodiment, a delay compensation is performed for the information to be transmitted that is transmitted across subracks among the information to be transmitted converged in the SC3 mode. That is, when the sender of the information to be transmitted is in another service subrack, the information to be transmitted is information transmitted across subracks, and a delay compensation needs to be performed for the timestamp of the information to be transmitted, to ensure that the transmission time of the information to be transmitted across subracks is the same as that of the information to be transmitted within the current service subrack, so that the information transmitted within the current service subrack and the information transmitted across subracks compete fairly for output. While improving the intra-subrack transmission path, the present application additionally provides a delay compensation for the cross-subrack transmission, so that the transmission time of the intra-subrack transmission is the same as that of the cross-subrack transmission, thereby ensuring that the intra-subrack transmission and the cross-subrack transmission compete fairly for output.

In an embodiment, the delay compensation is a static compensation or a dynamic compensation.

In an embodiment, if the delay compensation is the static compensation, a preset time is added to the timestamp of the information to be transmitted; and if the delay compensation is the dynamic compensation, a dynamic time is added to the timestamp of the information to be transmitted, where the dynamic time is determined according to the routing information.

The preset time may be obtained in advance through experimental measurement. For example, an average value, a median value, etc., is calculated according to data of multiple experiments, and a time value is determined as the preset time. Each time information to be transmitted is sent to another service subrack, the preset time is added to a timestamp of the information. The dynamic time refers to a time that changes dynamically, and the value obtained by each calculation may be different. The dynamic time is calculated in real time during the transmission of the information to be transmitted, and a dynamic compensation is performed according to a result of the calculation. A path is determined according to the routing information of the information to be transmitted during transmission. In this case, this path passes through the central switching chip. There is a path difference between this path and a path of direct transmission within the current service subrack. A time difference is calculated according to the path difference. The time difference is added as the dynamic time to the timestamp of the information to be transmitted.

In an embodiment, in a case that a current operating mode is a first mode, if a service subrack in which the recipient of the information to be transmitted is located is consistent with a service subrack in which a transmission status indicated by a switch register is located, a valid path is determined according to routing information of a recipient of information to be transmitted. In a case that the current operating mode is a second mode, if the recipient of the information to be transmitted is in a current service subrack and a transmission status indicated by the switch register is an intra-subrack transmission state, a valid path is determined according to an information transmission mode and a recipient of information to be transmitted. In the case of absence of the valid path, transmission failure information is reported.

In the case of presence of the valid path, the information to be transmitted is sent according to the valid path. In the case of absence of a valid path, sending of the information to be transmitted is stopped, and transmission failure information is reported. The transmission failure information may be a path search error, to alert the operation personnel or user that a path determination error occurs.

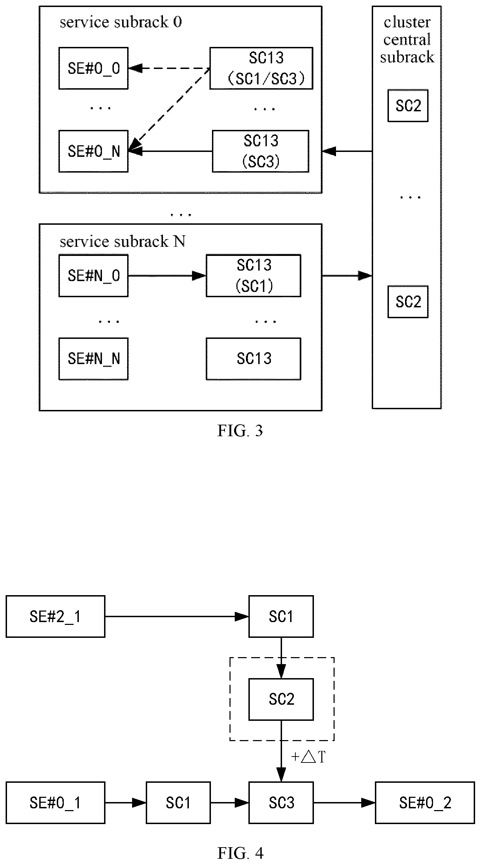

In the embodiment, FIG. 3 provides a schematic diagram of determining a valid path for information to be transmitted. As shown in FIG. 3, solid lines represent cross-subrack switching, and dashed lines represent intra-subrack switching. When data is transmitted from a source switching access chip SE#0_0 to a destination switching access chip SE#0_N through intra-subrack switching, the data only needs to pass through a switching network chip (SC13) without having to pass through a cluster central subrack. When data is transmitted from a switching access chip SE#N_0 to the destination switching access chip SE#0_N through cross-subrack switching, the data needs to pass through the cluster central subrack which sends the information to be transmitted to the switching network chip, and the switching network chip finally sends the information to be transmitted to the destination switching access chip SE#0_N. During the process of transmitting the information to be transmitted from the source switching access chip SE#0_0 to the destination switching access chip SE#0_N, the switching network chip not only needs to operate in the SC1 mode, but also needs to operate in the SC3 mode. The switching network chip SC13 (SC1/SC3) shown in the figure indicates that when information to be transmitted in the current service subrack is transmitted, the identical switching network chip is configured to operate in the SC1 mode or the SC3 mode. SC13 (SC3) indicates that the transmission of the information to be transmitted currently is performed in the SC3 mode, and SC13 (SC1) indicates that the transmission of the information to be transmitted currently is performed in the SC1 mode. The switching network chip SC13 shown in the figure may be one or more. The illustration of multiple switching network chips SC13 in the figure in the embodiment is merely for the purpose of describing and distinguishing the current operating modes, and is not intended to indicate there are multiple switching network chips. It may be regarded as one switching network chip, which is not limited in the embodiments of the present application.

In this embodiment, FIG. 4 provides a schematic diagram of a path delay compensation. As shown in FIG. 4, in an identical destination switching access chip SE#0_2, data transmitted from a source switching access chip SE#0_1 through intra-subrack switching and data transmitted from a source switching access chip SE#2_1 through cross-subrack transmission are converged in the SC3 mode. Because the optimized intra-subrack transmission does not pass through the cluster central subrack, the intra-subrack transmission has a shorter path delay than that of the cross-subrack transmission. During the switching, information carries a timestamp flag. There is a timestamp difference between the cross-subrack transmission and the intra-subrack transmission that are converged in the SC3 mode. The difference ΔT is obtained in advance through experimental measurement. A path delay compensation is performed by adding the timestamp difference ΔT in the cross-subrack transmission, or by dynamic compensation, so that the intra-subrack transmission and the cross-subrack transmission compete fairly for output.

According to the method for determining a path of the embodiment, in a case that a current operating mode is a first mode, if a recipient of information to be transmitted is in a current service subrack and a status of a switch register indicates an intra-subrack transmission state, or if the recipient of the information to be transmitted is in another service subrack and the status of the switch register indicates a cross-subrack transmission state, a valid path is determined according to routing information of the recipient of the information to be transmitted. In a case that the current operating mode is a second mode, if the recipient of the information to be transmitted is in the current service subrack and the status of the switch register indicates the intra-subrack transmission state, a valid path is determined according to an information transmission mode and the recipient of the information to be transmitted. By setting the switch register, the switch register is used to determine whether intra-subrack transmission or cross-subrack transmission is currently being performed, and information requiring intra-subrack transmission and information requiring cross-subrack transmission are distinguished from each other, for which valid paths are respectively determined for transmission, thereby reducing connection paths between the service subracks and the cluster central subrack. Compared with a switching path in some cases where a transmission chip and a destination chip are in the identical service subrack, the intra-subrack switching in the method of the present application reduces the switching path delay, and algorithmically reduces the probability of congestion in the cluster central subrack, thereby improving the robustness of the system.

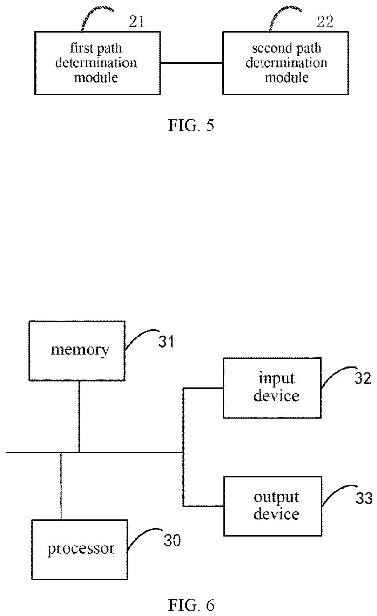

According to an embodiment of the present application, a device for determining a path is further provided. FIG. 5 is a schematic structural diagram of a device for determining a path according to an embodiment. As shown in FIG. 5, the device for determining a path includes: a first path determination module 21 and a second path determination module 22.

In an embodiment, the first path determination module 21 is configured to determine, in a case that a current operating mode is a first mode, a valid path according to routing information of a recipient of information to be transmitted if a service subrack in which the recipient of the information to be transmitted is located is consistent with a service subrack in which a transmission status indicated by a switch register is located. The second path determination module 22 is configured to determine, in a case that the current operating mode is a second mode, a valid path according to an information transmission mode and a recipient of information to be transmitted if the recipient of the information to be transmitted is in a current service subrack and a transmission status indicated by the switch register is an intra-subrack transmission state.

According to the device for determining a path of the embodiment, by setting the switch register, the switch register is used to determine whether intra-subrack transmission or cross-subrack transmission is currently being performed, and information requiring intra-subrack transmission and information requiring cross-subrack transmission are distinguished from each other, for which valid paths are respectively determined for transmission, thereby reducing connection paths between the service subracks and the cluster central subrack. Compared with a switching path in some cases where a transmission chip and a destination chip are in the identical service subrack, the intra-subrack switching in the method of the present application reduces the switching path delay, and reduces the probability of congestion in the cluster central subrack, thereby improving the robustness of the system.

In an embodiment, the first path determination module 21 is configured to determine a valid path for intra-subrack transmission according to the routing information of the recipient of the information to be transmitted if the recipient of the information to be transmitted is in the current service subrack and the transmission status indicated by the switch register is the intra-subrack transmission state.

In an embodiment, the first path determination module 21 is configured to determine a valid path for cross-subrack transmission according to the routing information of the recipient of the information to be transmitted if the recipient of the information to be transmitted is in another service subrack and the transmission status indicated by the switch register is a cross-subrack transmission state.

In an embodiment, the second path determination module 22 includes elements as follow.

A first path determination unit is configured to determine a valid path for intra-subrack transmission according to the routing information of the recipient of the information to be transmitted if the information transmission mode is a unicast mode.

A second path determination unit is configured to determine a valid path for intra-subrack transmission according to a subrack number of the recipient of the information to be transmitted if the information transmission mode is a multicast mode.

In an embodiment, the device further includes a compensation module.

The compensation module is configured to perform a delay compensation for a timestamp of the information to be transmitted if a sender of the information to be transmitted is in another service subrack.

In an embodiment, the compensation module includes elements as follow.

A static compensation unit is configured to add a preset time to the timestamp of the information to be transmitted, if the delay compensation is a static compensation.

A dynamic compensation unit is configured to add a dynamic time to the timestamp of the information to be transmitted if the delay compensation is a dynamic compensation, where the dynamic time is determined according to the routing information.

In an embodiment, the device further includes a failure reporting module.

The failure reporting module is configured to report transmission failure information in the case of absence of the valid path.

The device for determining a path provided in this embodiment and the method for determining a path provided in the above embodiments belong to the same inventive concept. For technical details that are not described in detail in this embodiment, reference may be made to any of the above embodiments. This embodiment has the same beneficial effects as the execution of the method for determining a path.

According to an embodiment of the present application, an apparatus for determining a path is further provided. FIG. 6 is a schematic structural diagram of an apparatus for determining a path according to an embodiment. As shown in FIG. 6, the apparatus includes a processor 30, a memory 31, an input device 32, and an output device 33. The apparatus may include one or more processors 30. FIG. 6 takes one processor 30 as an example. The processor 30, the memory 31, the input device 32, and the output device 33 may be connected by a bus or in other ways. Connection by a bus is taken as an example in FIG. 6.

The memory 31, as a computer-readable storage medium, may be configured for storing a software program, a computer-executable program, and modules, for example, program instructions/modules corresponding to the method for realizing row-level security in the embodiments of the present application (for example, the first sending module 21 and the second sending module 22 in the device for determining a path). The software programs, instructions, and modules stored in the memory 31, when executed by the processor 30, cause the processor 30 to execute various functional applications and data processing of the apparatus, i.e., implements the method for realizing row-level security described above.

The memory 31 may mainly include a program storage area and a data storage area. The program storage area may store an operating system, and an application required by at least one function. The data storage area may store data created according to the use of the terminal and the like. In addition, the memory 31 may include a high speed random access memory, and may also include a non-volatile memory, e.g., at least one magnetic disk storage device, flash memory device, or other non-volatile solid-state storage device. In some examples, the memory 31 may further include memories located remotely from the processor 30, and the remote memories may be connected to the device via a network. Examples of the network include, but are not limited to, the Internet, an intranet, a local area network, a mobile communication network, and a combination thereof.

The input device 32 may be configured to receive inputted numerical or character information, and generate a key signal input related to user settings and function control. The output device 33 may include a display device such as a display screen.

According to an embodiment of the present application, further provided is a storage medium storing computer-executable instructions which, when executed by a computer processor, cause the computer processor to carry out a method for determining a path. The method include steps as follow.

In a case that a current operating mode is a first mode, a valid path is determined according to routing information of a recipient of information to be transmitted if a service subrack in which the recipient of the information to be transmitted is located is consistent with a service subrack in which a transmission status indicated by a switch register is located.

In a case that the current operating mode is a second mode, a valid path is determined according to an information transmission mode and a recipient of information to be transmitted if the recipient of the information to be transmitted is in a current service subrack and a transmission status indicated by the switch register is an intra-subrack transmission state.

Of course, for the storage medium storing the computer-executable instructions provided in the embodiments of the present application, the computer-executable instructions are not limited to the above method operations, and may also perform the related operations in the method for determining a path provided in any one of the embodiments of the present application.

According to the method, apparatus and device for determining a path, and the storage medium provided in the present application, in a case that a current operating mode is a first mode, a valid path is determined according to routing information of a recipient of information to be transmitted if a service subrack in which the recipient of the information to be transmitted is located is consistent with a service subrack in which a transmission status indicated by a switch register is located. In a case that the current operating mode is a second mode, a valid path is determined according to an information transmission mode and a recipient of information to be transmitted if the recipient of the information to be transmitted is in a current service subrack and a transmission status indicated by the switch register is an intra-subrack transmission state. It can be seen that in this technical scheme, the valid path is determined by determining whether the service subrack in which the recipient of the information to be transmitted is located is consistent with the service subrack in which the transmission status indicated by the switch register is located. Therefore, not all information to be transmitted needs to be transmitted to the recipient through the cluster central subrack, so that connection links between the cluster central subrack and service subracks are reduced, thereby reducing the probability of network congestion and improving the robustness of the system.

From the above detailed description of the embodiments, those having ordinary skill in the art may clearly understand that the present application can be implemented by software and necessary general-purpose hardware, and of course may also be implemented by hardware, but in many cases, the former is a better implementation. Based on such an understanding, the technical schemes of the present application essentially or the part contributing to existing technologies may be embodied in the form of a software product. The computer software product may be stored in a computer-readable storage medium such as a floppy disk, a read-only memory (ROM), a random access memory (RAM), a flash memory, a hard disk, an optical disc, etc., of a computer, and includes several instructions for instructing a computer device (which may be a personal computer, a server, a network device, or the like) to execute the methods described in the embodiments of the present application.

It should be noted that the units and modules included in the above embodiments of the apparatus for determining a path are divided according to functional logic only, but are not limited to the above division, as long as the corresponding functions can be realized. In addition, the specific names of the functional units are merely for the convenience of distinguishing from each other, and are not intended to limit the protection scope of the present application.

It should be noted that the above only describes some embodiments of the present application and technical principles employed. It should be understood by those having ordinary skill in the art that the present application is not limited to the specific embodiments described herein, and various obvious changes, readjustments, and replacements can be made by those having ordinary skill in the art without departing from the protection scope of the present application. Therefore, although the present application has been described in detail through the above embodiments, the present application is not limited thereto, and may also include more other equivalent embodiments without departing from the concept of the present application. The scope of the present application is defined by the appended claims.

## Claims

1. A method for determining a path, applied to a switching network chip, comprising:
determining, in a case that a current operating mode is a first mode, a valid path according to routing information of a recipient of information to be transmitted, in response to a service subrack in which the recipient of the information to be transmitted is located being consistent with a service subrack in which a transmission status indicated by a switch register is located; and
determining, in a case that the current operating mode is a second mode, a valid path according to an information transmission mode and a recipient of information to be transmitted, in response to the recipient of the information to be transmitted being in a current service subrack and a transmission status indicated by the switch register being an intra-subrack transmission state.

2. The method of claim 1, wherein determining a valid path according to routing information of a recipient of information to be transmitted, in response to a service subrack in which the recipient of the information to be transmitted is located being consistent with a service subrack in which a transmission status indicated by a switch register is located comprises:
determining a valid path for intra-subrack transmission according to the routing information of the recipient of the information to be transmitted, in response to the recipient of the information to be transmitted being in the current service subrack and the transmission status indicated by the switch register being the intra-subrack transmission state.

3. The method of claim 1, wherein determining a valid path according to routing information of a recipient of information to be transmitted, in response to a service subrack in which the recipient of the information to be transmitted is located being consistent with a service subrack in which a transmission status indicated by a switch register is located comprises:
determining a valid path for cross-subrack transmission according to the routing information of the recipient of the information to be transmitted, in response to the recipient of the information to be transmitted being in another service subrack and the transmission status indicated by the switch register being a cross-subrack transmission state.

4. The method of claim 1, wherein determining a valid path according to an information transmission mode and a recipient of information to be transmitted comprises:
determining a valid path for intra-subrack transmission according to the routing information of the recipient of the information to be transmitted, in response to the information transmission mode being a unicast mode; and
determining a valid path for intra-subrack transmission according to a subrack number of the recipient of the information to be transmitted, in response to the information transmission mode being a multicast mode.

5. The method of any one of claims 1-4, wherein prior to determining a valid path according to an information transmission mode and a recipient of information to be transmitted, the method further comprises:
performing a delay compensation for a timestamp of the information to be transmitted, in response to a sender of the information to be transmitted being in another service subrack.

6. The method of claim 5, wherein the performing a delay compensation for a timestamp of the information to be transmitted comprises:
adding a preset time to the timestamp of the information to be transmitted, in response to the delay compensation being a static compensation; and
adding a dynamic time to the timestamp of the information to be transmitted, in response to the delay compensation being a dynamic compensation, wherein the dynamic time is determined according to the routing information.

7. The method of claim 1, further comprising:
reporting transmission failure information in response to the valid path being not present.

8. A device for determining a path, comprising:
a first path determination module, configured to determine, in a case that a current operating mode is a first mode, a valid path according to routing information of a recipient of information to be transmitted, in response to a service subrack in which the recipient of the information to be transmitted is located being consistent with a service subrack in which a transmission status indicated by a switch register is located; and
a second path determination module, configured to determine, in a case that the current operating mode is a second mode, a valid path according to an information transmission mode and a recipient of information to be transmitted, in response to the recipient of the information to be transmitted being in a current service subrack and a transmission status indicated by the switch register being an intra-subrack transmission state.

9. An apparatus for determining a path, comprising:
one or more processors; and
a memory, configured to store one or more programs, wherein,
the one or more programs, when executed by the one or more processors, cause the one or more processors to perform the method for determining a path of any one of claims 1-7.

10. A computer-readable storage medium, storing a computer program which, when executed by a processor, causes the processor to perform the method for determining a path of any one of claims 1-7.
